# EUROPEAN PATENT SPECIFICATION

(11) **EP 2 039 911 B1**
(45) Date of publication and mention of the grant of the patent: **18.11.2015**
(21) Application number: 08253042.9
(22) Date of filing: 16.09.2008
(51) Int. Cl.: F02B 61/02, F16H 57/02

(54) **Motorcycle**
Motorrad
Motocyclette

(30) Priority: 18.09.2007 JP 2007240355
(43) Date of publication of application: 25.03.2009
(73) Proprietor: Yamaha Hatsudoki Kabushiki Kaisha, Iwata-shi, Shizuoka 438-8501 (JP)
(72) Inventor: Tsukada, Mitsuhiko c/o Yamaha Hatsudoki Kabushiki Kaisha, 438-8501 (JP)
(74) Representative: Moreland, David

(56) References cited:
- DE-A1- 19 944 013
- JP-A- 7 208 141
- JP-A- 10 024 881
- JP-A- 10 077 862
- JP-A- 2000 104 557
- JP-U- H0 222 451

## Description

### FIELD OF THE INVENTION

The present invention relates to a motorcycle including a vehicle speed sensor that detects a running speed of a vehicle.

### BACKGROUND TO THE INVENTION

JP-A-2000-87780 discloses a motorcycle which includes a crank case in which a crank shaft, an input shaft (a main shaft) and an output shaft are arranged substantially in parallel with each other in the front-rear direction of the vehicle. A vehicle speed sensor is attached to a rear wall of the crank case, and detects the rotation speed of the output shaft as a vehicle speed.

In the above-described motorcycle, the vehicle speed sensor is attached such that it protrudes to the rear of the crank case, which may result in an increase in the front-rear length of an engine. In addition, because the vehicle speed sensor is attached in a protruding manner, provision of an additional structural device has to be considered for protection against flying stones etc.

The invention has been accomplished in light of the above-described circumstances, and it is an object of the invention to provide a motorcycle that is capable of reducing the front-rear length and simply protecting a vehicle speed sensor. A motorcycle comprising a breather chamber protruding upward from a rear end of a crankcase is known from JP10077862.

### SUMMARY OF THE INVENTION

According to an aspect of the present invention there is provided a motorcycle comprising:
a crank case;
a breather chamber protruding upward from a rear end of the crank case and adapted for accommodating separation of lubricating oil from blow-by gas generated in an engine; and
a vehicle speed sensor provided in front of the breather chamber on an upper surface of the crank case at a position that is lower than a top of the breather chamber.

The motorcycle may further comprise a cylinder protruding generally upward from the crank case in front of the vehicle speed sensor.

The motorcycle may further comprise a starter attached to the upper surface of the crank case in front of the vehicle speed sensor.

The vehicle speed sensor may be disposed, with respect to the starter, such that a height dimension and a width dimension of the vehicle speed sensor are less than those of the starter.

The vehicle speed sensor may be attached to the upper surface of the crank case such that a longitudinal axis of the vehicle speed sensor is inclined with respect to a vertical axis.

The vehicle speed sensor may have a tip end serving as a detection section. The detection section may be inserted into the crank case.

The motorcycle may further comprise a main shaft disposed to the rear of a crank shaft and a drive shaft disposed to the rear of the main shaft. The main and drive shafts may be disposed within the crankcase. The vehicle speed sensor may be disposed above at least one of the main shaft and the drive shaft. The vehicle speed sensor may be arranged to detect a rotation speed of at least one of the main shaft and the drive shaft as a vehicle speed. The vehicle speed sensor may be arranged to detect the speed of the crank shaft as a vehicle speed.

The vehicle speed sensor may be located above a neutral switch that is attached to a side surface of the crank case.

The vehicle speed sensor may be disposed to overlap with the breather chamber in a front-rear direction when viewed from a side of the motorcycle.

The breather chamber may include, on the upper surface of the crank case, a main body section that extends in a vehicle width direction and a discharge section that protrudes forward from one end in the vehicle width direction of the main body section and that discharges separated gas that has been separated out in the breather chamber to an intake system of the engine. The vehicle speed sensor may be disposed to overlap with the discharge section in the front-rear direction when viewed from the side of the motorcycle.

The vehicle speed sensor may have a connector connecting section at one end in a longitudinal direction, and may be attached such that an axis in the longitudinal direction intersects an axis extending in a vehicle width direction.

According to another aspect of the present invention there is provided an engine comprising:
a crank case;
a breather chamber protruding upward from a rear end of the crank case and adapted for accommodating separation of lubricating oil from blow-by gas generated in the engine; and
a vehicle speed sensor provided in front of the breather chamber on an upper surface of the crank case at a position that is lower than a top of the breather chamber.

Another aspect of the present invention relates to a motorcycle which includes: a crank case; a breather chamber which protrudes upward from a rear end of the crank case and in which lubricating oil is separated out from blow-by gas that is generated in an engine; and a vehicle speed sensor that is provided in front of the breather chamber on an upper surface of the crank case, at a position that is lower than a top of the breather chamber.

According to the invention, the vehicle speed sensor is provided on the upper surface of the crank case, instead of a rear side surface of the crank case. Therefore, the vehicle speed sensor does not protrude to the rear of the engine, and the front-rear length of the engine can be reduced. In addition, because the vehicle speed sensor is located in front of the breather chamber that protrudes higher than the attachment height of the vehicle speed sensor, the vehicle speed sensor can be protected from flying stones etc. that fly in from the rear side of the breather chamber.

### BRIEF DESCRIPTION OF THE DRAWINGS

These and other aspects of the present invention will now be described, by way of example only, with reference to the accompanying drawings, in which:
FIG. 1 is a side view showing the structure in the vicinity of a vehicle speed sensor;
FIG. 2 is a side cross sectional view showing main components in an enlarged manner;
FIG. 3 is a cross sectional plan view showing a transmission section;
FIG. 4 is a plan view showing the vicinity of the vehicle speed sensor;
FIG. 5 is a plan view showing a schematic layout of the vehicle speed sensor according to a second embodiment;
FIG. 6 is a side view showing a schematic layout of the vehicle speed sensor according to a third embodiment; and
FIG. 7 is a side view showing a schematic layout of the vehicle speed sensor according to a fourth embodiment.

### DETAILED DESCRIPTION OF THE DRAWINGS

### First Embodiment

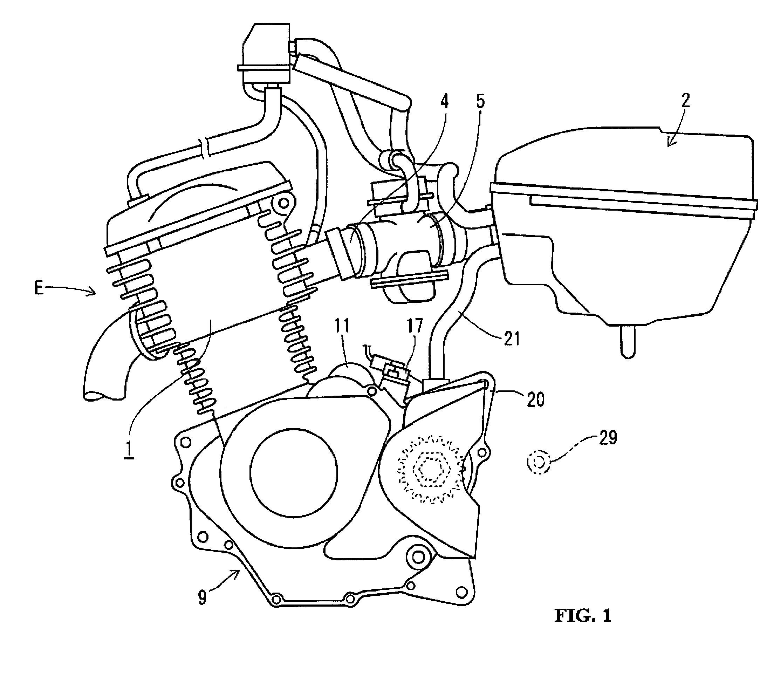

A first embodiment of the invention will be described with reference to FIG. 1 to FIG. 4. Note that, in the following description, the terms "front and rear" indicate the front and rear that correspond to the front-rear direction of the vehicle, and the terms "left and right" indicate the left and right as viewed by a driver.

FIG. 1 shows a single cylinder engine E for a motorcycle. A cylinder 1 is provided in a front section of the engine E such that it protrudes upward in a forwardly inclined manner. The entire engine E is supported by a body frame of the motorcycle. Similarly, an air cleaner 2 is provided at the upper side of a rear section of the engine E, and is also supported by the body frame. The air cleaner 2 and a cylinder head side are connected by an intake pipe 4, and a valve unit 5 that accommodates a throttle valve (not shown in the figures) is fitted in the middle of the intake pipe 4.

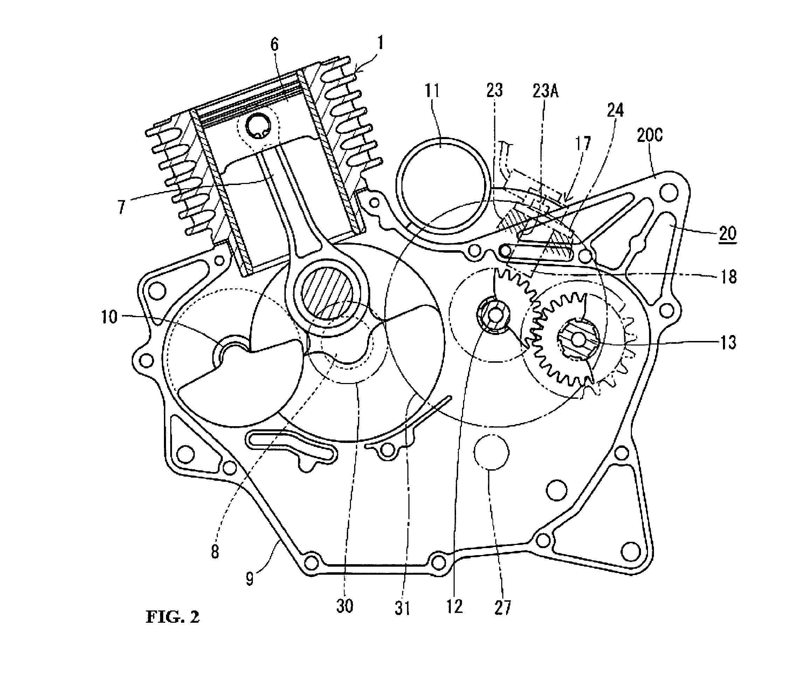

A piston 6 (see Fig. 2) is provided in the cylinder 1 such that it can move in the up-down direction, and a crank shaft 8 is connected to the piston 6 via a connecting rod 7. A crank case 9 is provided below the cylinder 1, and the crank shaft 8 is rotatably disposed in the crank case 9 in the vehicle width direction. A balancer shaft 10 is provided in front of and in parallel with the crank shaft 8 and is rotatably supported in the crank case 9. The balancer shaft 10 can rotate in conjunction with the crank shaft 8 when gears (not shown in the figures) that are fitted onto the respective shafts mesh with each other.

Further, a starter 11 is provided on an upper surface of the crank case 9, to the rear of the cylinder 1. The starter 11 is provided such that the longitudinal axis thereof extends in the vehicle width direction. When the starter 11 is driven, driving force can be transmitted from an output shaft of the starter 11 to the crank shaft 8 as a result of the meshing of gears fitted to the respective shafts, and due to an operation of a one-way clutch provided on the crank shaft 8 side.

In the crank case 9, a main shaft 12 and a drive shaft 13 are disposed to the rear of and in parallel with the crank shaft 8. The main shaft 12 and the drive shaft 13 are arranged in parallel in the front-rear direction, and are respectively rotatably supported by the crank case 9. The main shaft 12 and the crank shaft 8 are structured such that, when reduction gears 30 and 31 that are fitted to the respective shafts mesh with each other, the driving force from the crank shaft 8 is transmitted to the main shaft 12 via a clutch mechanism (not shown in the figures) that is provided at the end of the main shaft 12 on the vehicle right side.

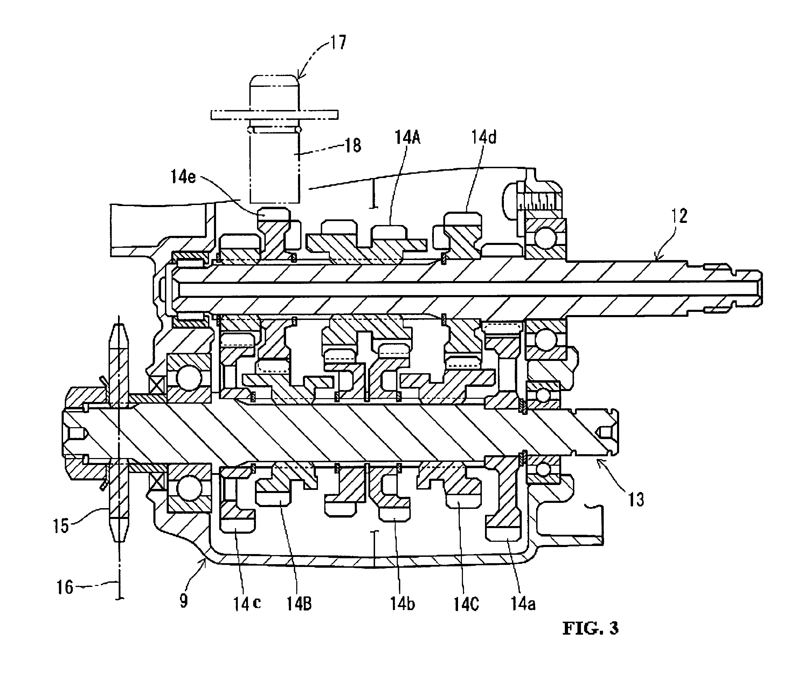

The main shaft 12 and the drive shaft 13 are provided with a group of gears 14 including a plurality of gears (refer to FIG. 3). The group of gears 14 includes movable gears 14A to 14C and fixed gears 14a to 14e. The movable gears 14A to 14C are spline-fitted to the main shaft 12 and the drive shaft 13, and can be moved in the axial direction by a shift fork (not shown in the figures). The fixed gears 14a to 14e are fixed at respective positions such that their movement is restricted in the axial direction.

The shaft end of the drive shaft 13 on the left side of the vehicle body protrudes outwardly from a side surface of the crank case 9, and a sprocket 15 is attached to the protruding end. A chain 16 for driving a rear wheel is wound around the sprocket, and rotation of the drive shaft 13 can be transmitted to the rear wheel.

A vehicle speed sensor 17 is disposed above a peripheral surface of the fixed gear 14e on the main shaft 12 among the group of gears 14. The fixed gear 14e is formed of a magnetic material such as steel, and has the largest outer diameter among the gears provided on the main shaft 12, and functions as a fifth speed gear. The vehicle speed sensor 17 has a tip end serving as a cylinder-shaped detection section 18, and detects changes in magnetic flux to generate an electric pulse. The vehicle speed sensor 17 is attached to the upper surface of the crank case 9 and is oriented to face the teeth of the fixed gear 14e on the main shaft 12 from the outside in the radial direction. The attachment of the vehicle speed sensor 17 will be described later in detail including its positional arrangement.

A breather chamber 20 is formed at the rear end of the upper surface of the crank case 9. The breather chamber 20 has a main body section 20A having a generally triangular prism shape that extends in the width direction of the crank case 9. The main body section 20A is formed such that the upper edge thereof is slightly inclined to the rear, and an attachment section 20C is formed at the upper edge. The attachment section 20C is tightened to the body frame together with another attachment section provided at a corner of the crank case 9 using bolts. Thus, the entire engine E is attached to the body frame. In this embodiment, a discharge section 20B is integrally formed to extend forward from a front surface of a vehicle right half section that extends across generally the right half of the main body section 20A.

A section of the breather chamber 20 is communicated with a space that accommodates the main shaft 12 and the drive shaft 13 in the crank case 9. Thus, a blow-by gas including mist of lubricating oil that is generated in the crank case 9 is taken into the breather chamber 20. Since a labyrinth structure, for example, is formed in the breather chamber 20, a liquid component (oil) contained in the blow-by gas can be separated out from a gas component while the blow-by gas is passing through the path of the labyrinth. The liquid component that has been separated in the breather chamber 20 is fed back to the inside (an oil pan) of the crank case 9. The gas component is fed from the discharge section 20B to the air cleaner 2 through a return pipe 21, and then supplied to an intake system through an element in the air cleaner 2.

The above-described discharge section 20B of the breather chamber 20 is formed to extend toward the front with a downward inclination from a lower section of the attachment section 20C of the upper edge of the breather chamber 20, and the front edge of the discharge section 20B extends to a mounting position of the starter 11. On the other hand, a front surface of a vehicle left half section of the breather chamber 20, where the discharge section 20B is not formed, is more steeply inclined than the front surface of the discharge section 20B. As a result, a region that is three-dimensionally surrounded by the front surface of a vehicle right half section of the breather chamber 20, which is on the upper surface of the crank case 9, the starter 11 and the vehicle left side surface of the discharge section 20B is defined as an attachment region 22 for the vehicle speed sensor 17. Thus, when viewed from the side of the vehicle, the vehicle speed sensor 17 is disposed to overlap with the discharge section 20B of the breather chamber 20 in the front-rear direction.

An attachment cylinder 23 for the vehicle speed sensor 17 stands in the attachment region 22, and an insertion hole 23A that is located above the fixed gear 14e on the main shaft 12 opens to the attachment cylinder 23. Note that the axis of the insertion hole 23A is oriented obliquely to the rear with respect to the vertical axis. Further, in the vehicle speed sensor 17, a flange piece 24 for attachment is integrally formed to bulge outward near the upper end of the detection section 18. The flange piece 24 has a shape that matches the upper surface of the attachment cylinder 23. The flange piece 24 is placed on the attachment cylinder 23 and is screwed thereto, thereby fixing the vehicle speed sensor 17. The vehicle speed sensor 17 includes an integrated connector 25 on the upper surface of the flange piece 24. The attachment orientation of the vehicle speed sensor 17 is set such that, when the vehicle speed sensor 17 is fixed to the crank case 9, the fitting axis with a mating connector 26 as a fitting mate obliquely extends in the front-rear direction of the vehicle, that is, the fitting axis with the mating connector 26 is obliquely and right forwardly directed in the front-rear direction of the vehicle. Thus, the fitting axis obliquely intersects the longitudinal axis of the starter 11. Further, when the vehicle speed senor 17 has been attached, the height position of the upper most end of the vehicle speed sensor 17 (including the mating connector) is lower than both the height position of the upper edge of the attachment section 20C of the breather chamber 20 and the height position of the top of the starter 11.

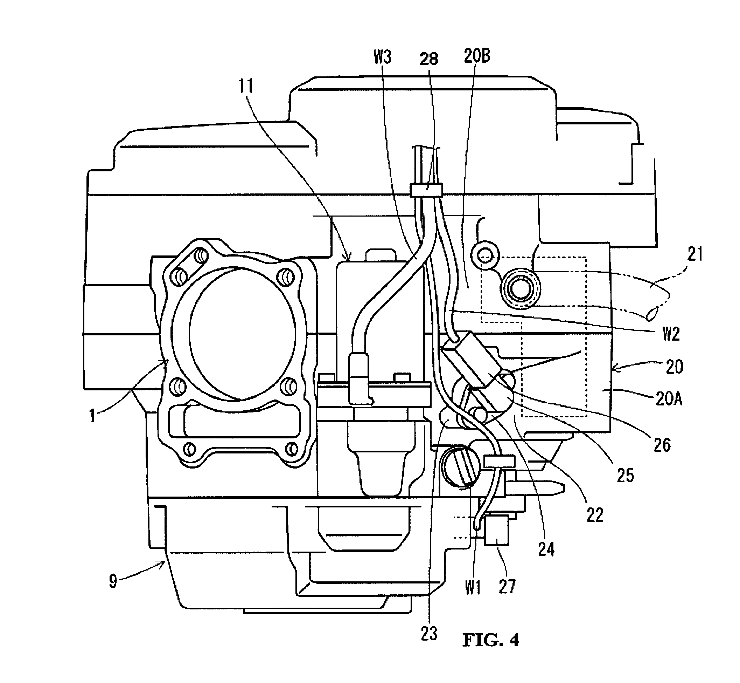

A neutral switch 27 is attached to the left side surface of the crank case 9 at a position almost directly below the main shaft 12. The neutral switch 27 detects the neutral position of a shift cam (not shown in the figures) that rotates in conjunction with operation of a change pedal in the crank case 9. The neutral switch 27 causes an indicator to be turned on or off, thereby informing the driver of the neutral position. The position of the neutral switch 27 in the front-rear direction of the vehicle is also generally aligned with the vehicle speed sensor 17. Therefore, after an electric wire W1 that extends from the neutral switch 27 is pulled out toward the upper surface of the crank case 9, as shown in FIG. 4, it is bundled using a clamp 28 with an electric wire W2 of the vehicle speed sensor 17, and further with an electric wire W3 of the starter 11 that is adjacent to the vehicle speed sensor 17. Then, the bundled wires are laid out to the right in the vehicle width direction.

The first embodiment is structured as described above. In the first embodiment, the vehicle speed sensor 17 is attached to the upper surface of the crank case 9, and the vehicle speed sensor 17 does not protrude from a rear surface of the crank case 9 unlike the related art. As a result, the front-rear length of the engine E can be reduced. In addition, in many cases, a pivot section of a rear swing arm is provided on the rear surface of the crank case 9. In this case, if the vehicle speed sensor 17 is attached to the rear surface of the crank case 9, a countermeasure to avoid interference with a pivot section 29 is required. However, according to the layout of this embodiment, such a countermeasure is not required, and the degree of freedom in design relating to the layout of the pivot section 29 can be increased.

Moreover, the vehicle speed sensor 17 that is attached to the upper surface of the crank case 9 is interposed between two protruding structures, i.e., the breather chamber 20 and the starter 11. Therefore, the vehicle speed sensor 17 is also protected from being affected by foreign matter. Particularly, in the first embodiment, the discharge section 20B of the breather chamber 20 is located on a side (the right side) of the vehicle speed sensor 17, and three sides (i.e. , the front, rear and right sides) of the attachment region 22 of the vehicle speed sensor 17 are surrounded by the protruding structures. Thus, the vehicle speed sensor 17 can be more reliably protected.

The following characteristic structure can be identified in the above-described embodiment.
(1) In front of the vehicle speed sensor 17, the cylinder 1 protrudes generally upward from the crank case 9.
   With this structure, the vehicle speed sensor 17 is arranged to be interposed between the two protruding members, i.e., between the cylinder 1 and the breather chamber 20 in the front-rear direction. Thus, the vehicle speed sensor 17 can be more reliably protected.
(2) The starter 11 that is attached to the upper surface of the crank case 9 is provided in front of the vehicle speed sensor 17.
   With this structure, the vehicle speed sensor 17 is arranged to be interposed between the two protruding members, i.e., between the starter 11 and the breather chamber 20 in the front-rear direction. Thus, the vehicle speed sensor 17 can be more reliably protected. In addition, because the starter 11 is disposed adjacent to the vehicle speed sensor 17, electric wires connected to them can be integrated. Accordingly, the number of clamps to fix the electric wires can be reduced. Moreover, because the vehicle speed sensor 17 is provided in a recess between the breather member and the starter 11, the advantageous effect that the vehicle speed sensor 17 is even better protected can also be obtained.
(3) The vehicle speed sensor 17 is attached to the upper surface of the crank case 9 such that the longitudinal axis of the vehicle speed sensor 17 is inclined with respect to the vertical axis.
   With this structure, because the vehicle speed sensor 17 is attached in an inclined manner with respect to the vertical axis, the height position of the top of the vehicle speed sensor 17 can be lowered. Accordingly, the height difference from the breather chamber 20 can be made larger. Therefore, if the height difference from the breather chamber 20 that is necessary to protect the vehicle speed sensor 17 is the same, the height of the breather chamber 20 can be lowered as compared to a case where the vehicle speed sensor 17 is attached in an upright manner.
(4) The tip end of the vehicle speed sensor 17 serves as the detection section 18, and the detection section 18 is inserted into the crank case 9. Further, the main shaft 12 that is disposed to the rear of the crank shaft 8 and the drive shaft 13 that is disposed to the rear of the main shaft 12 are accommodated in the crank case 9. Furthermore, the vehicle speed sensor 17 is located above the main shaft 12, and is capable of detecting the rotation speed of the main shaft 12 as the vehicle speed.
   With this structure, because the vehicle speed sensor 17 is disposed at a front section of the breather chamber 20, i.e., at a position in front of the rear end of the crank case 9, it is desirable to select, as a detection target, the main shaft 12 that is located in the middle among the shafts provided in the transmission. If the drive shaft 13 that is located at the rearmost position among the shafts provided in the transmission is selected as the detection target, it is necessary to shorten the breather chamber 20 in the front-rear direction in order to provide the attachment region 22 for the vehicle speed sensor 17. In this case, sufficient capacity of the breather chamber 20 cannot be secured. On the other hand, when the above-described structure is adopted, sufficient capacity of the breather chamber 20 can be efficiently secured.
(5) The vehicle speed sensor 17 is located above the neutral switch 27 that is attached to the side surface of the crank case 9.
   With this structure, because the vehicle speed sensor 17 is provided almost directly above the neutral switch 27, the electric wires that are respectively connected can be aligned substantially on the same line. As a result, the binding of the electric wires is simplified.
(6) The vehicle speed sensor 17 is disposed to overlap with the breather chamber 20 in the front-rear direction when viewed from the side of the vehicle.
   With this structure, because the vehicle speed sensor 17 is positioned to overlap with the breather chamber 20 in the front-rear direction, the layout efficiency of the upper surface of the crank case 9 can be improved.
(7) The breather chamber 20 includes, on the upper surface of the crank case 9, the main body section 20A that extends in the vehicle width direction, and the discharge section 20B that protrudes forwardly from one end in the vehicle width direction of the main body section 20A and that discharges separated gas that is separated in the breather chamber 20 to the intake system of the engine E. In addition, the vehicle speed sensor 17 is disposed to overlap with the discharge section 20B in the front-rear direction when viewed from the side of the vehicle.
   With this structure, because the vehicle speed sensor 17 is disposed to overlap, in the front-rear direction, with the discharge section 20B that partially protrudes from the main body section 20A of the breather chamber 20, the layout efficiency of the upper surface of the crank case 9 can be improved.
(8) The vehicle speed sensor 17 is disposed, with respect to the starter 11, such that the height dimension and the width dimension of the vehicle speed sensor 17 are less than those of the starter 11.
   With this structure, the vehicle speed sensor 17 is more reliably protected.
(9) The vehicle speed sensor 17 has a connector connecting section at one end in the longitudinal direction, and is attached such that the longitudinal axis of the vehicle speed sensor 17 intersects the axis extending in the vehicle width direction.
   With this structure, although the vehicle speed sensor 17 is interposed between the breather chamber 20 and the starter 11 in the front-rear direction of the vehicle, when the attachment orientation of the vehicle speed sensor 17 is a direction that intersects the axis extending in the vehicle width direction, sufficient room is provided between the connecter connecting section and the breather chamber 20 or the starter 11. As a result, connection of the connector connecting section can be easily performed.

### Second Embodiment

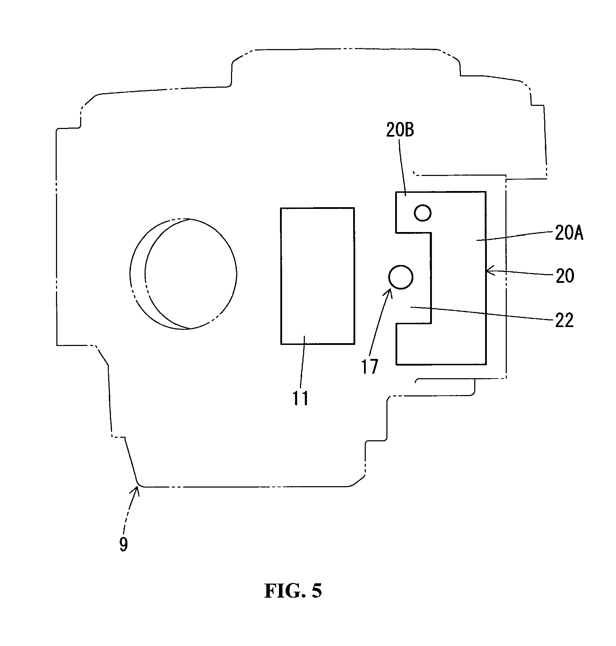

A second embodiment of the invention will now be described with reference to FIG. 5. In the first embodiment, the three sides of the vehicle speed sensor 17 are surrounded by the front surface of the main body section 20A of the breather chamber 20, the side surface of the discharge section 20B, and the starter 11. On the other hand, in the second embodiment, the attachment region 22 for the vehicle speed sensor 17 is formed by cutting out the front surface of the breather chamber 20.

With this structure, because four sides of the vehicle speed sensor 17 are surrounded by the protruding members, protection for the vehicle speed sensor 17 is strengthened further.

### Third Embodiment

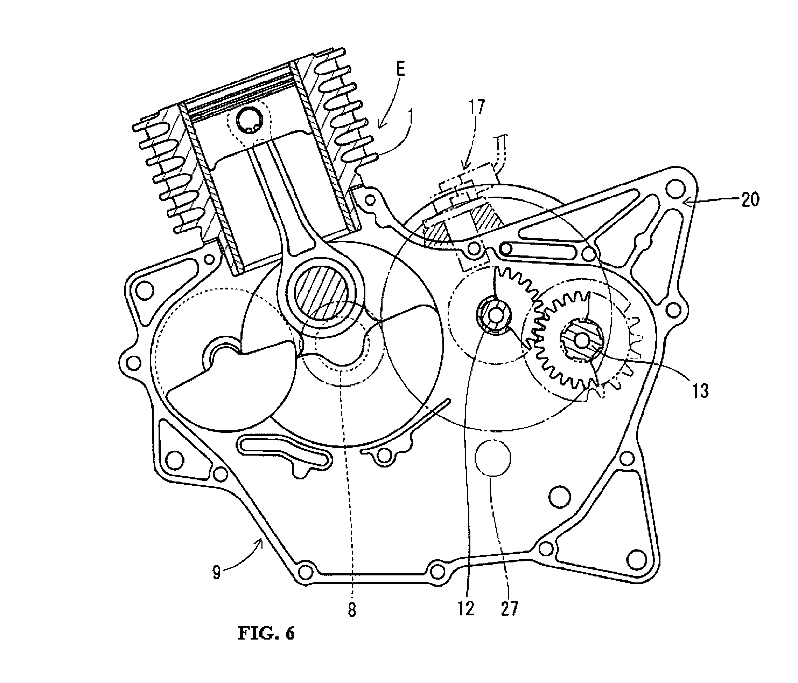

A third embodiment of the invention will now be described with reference to FIG. 6. This embodiment is applied to motorcycles in which the starter 11 is not employed and the engine E is started by a kick pedal.

Also in such motorcycles, because the cylinder 1 stands in front of the vehicle speed sensor 17, the front and the rear of the vehicle speed sensor 17 are positioned between protruding members. Accordingly, effective protection against foreign matter can be achieved

### Fourth Embodiment

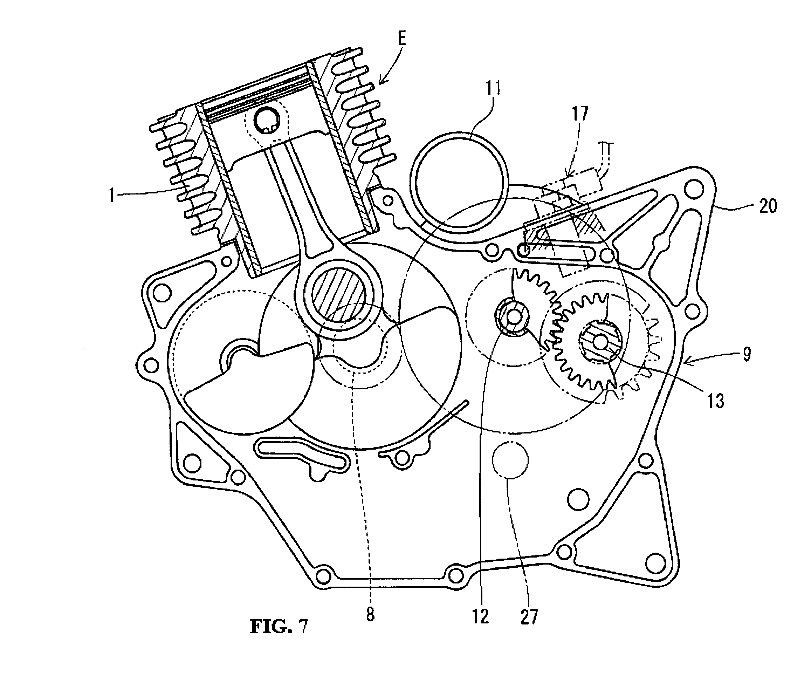

A fourth embodiment of the invention will now be described with reference to FIG. 7. In this embodiment, the detection target of the vehicle speed sensor 17 is the drive shaft 13 instead of the main shaft 12. Further, although the vehicle speed sensor 17 is attached to the crank case 9 in a rearwardly inclined manner in the first embodiment, the vehicle speed sensor 17 is attached in a forwardly inclined manner in this embodiment. In this case, if the starter 11 is not provided like the third embodiment, the vehicle speed sensor 17 can be easily attached. Further, if the vehicle speed sensor 17 is attached in a forwardly inclined manner such that it faces the opposite side of the breather chamber 20, the area (the capacity) of a section of the breather chamber 20 that needs to be cut out can be reduced. Accordingly, the structure of this embodiment is effective to secure sufficient capacity of the breather chamber 20.

### Other Embodiments

The invention is not limited by the description and the drawings that constitute the above embodiments. For example, the following embodiments are also included in the technical scope of the invention. Further, the invention permits of various modified forms, in addition to the following embodiments, without departing from the scope of the invention, which is defined by the claims.
(1) The invention is not limited to the case where the cylinder 1 is provided on the upper surface of the crank case 9 in a forwardly inclined manner as described in this embodiment. The cylinder 1 may protrude toward the front or toward the side. Also in such a case, the vehicle speed sensor 17 is protected by the breather chamber 20.
(2) The engine E is not limited to a single cylinder engine. The number of cylinders is not particularly limited.

### Description of the Reference Numerals and Signs

- 1: Cylinder
- 8: Crank shaft
- 9: Crank case
- 11: Starter
- 12: Main shaft
- 13: Drive shaft
- 17: Vehicle speed sensor
- 20: Breather chamber
- 20B: Discharge section
- 25, 26: Connector
- 27: Neutral switch
- 28: Clamp

## Claims

1. An engine (E) comprising:
a crank case (9);
a breather chamber (20) protruding upward from a rear end of the crank case (9) and adapted for accommodating separation of lubricating oil from blow-by gas generated in the engine (E); and
a vehicle speed sensor (17) provided in front of the breather chamber (20) on an upper surface of the crank case (9) at a position that is lower than a top of the breather chamber (20).

2. A motorcycle comprising an engine according to claim 1.

3. The motorcycle according to claim 2, further comprising a cylinder (1) protruding generally upward from the crank case (9) in front of the vehicle speed sensor (17) .

4. The motorcycle according to claims 2 or 3, further comprising a starter (11) attached to the upper surface of the crank case (9) in front of the vehicle speed sensor (17).

5. The motorcycle according to claim 4, wherein the vehicle speed sensor (17) is disposed, with respect to the starter (11), such that a height dimension and a width dimension of the vehicle speed sensor (17) are less than those of the starter (11).

6. The motorcycle according to any of claims 2 to 5, wherein the vehicle speed sensor (17) is attached to the upper surface of the crank case (9) such that a longitudinal axis of the vehicle speed sensor (17) is inclined with respect to a vertical axis.

7. The motorcycle according to any of claims 2 to 6, wherein the vehicle speed sensor (17) has a tip end (18) serving as a detection section, and the detection section is inserted into the crank case (9).

8. The motorcycle according to any of claims 2 to 7, further comprising a main shaft (12) disposed to the rear of a crank shaft (8) and a drive shaft (13) disposed to the rear of the main shaft (12), wherein the vehicle speed sensor (17) is disposed above at least one of the main shaft (12) and the drive shaft (13) and is arranged to detect a rotation speed of at least one of the main shaft (12) and the drive shaft (13) as a vehicle speed.

9. The motorcycle according to any of claims 2 to 8, wherein the vehicle speed sensor (17) is located above a neutral switch (27) that is attached to a side surface of the crank case (9).

10. The motorcycle according to any of claims 2 to 9, wherein the vehicle speed sensor (17) is disposed to overlap with the breather chamber (20) in a front-rear direction when viewed from a side of the motorcycle.

11. The motorcycle according to any of claims 2 to 10, wherein:
the breather chamber (20) includes, on the upper surface of the crank case (9), a main body section (20A) that extends in a vehicle width direction and a discharge section (20B) that protrudes forward from one end in the vehicle width direction of the main body section (20A) and that discharges separated gas that has been separated out in the breather chamber (20) to an intake system of the engine (E); and
the vehicle speed sensor (17) is disposed to overlap with the discharge section in the front-rear direction when viewed from the side of the motorcycle.

12. The motorcycle according to any of claims 2 to 11, wherein the vehicle speed sensor (17) has a connector (25) connecting section at one end in a longitudinal direction, and is attached such that an axis in the longitudinal direction intersects an axis extending in a vehicle width direction.

## Patentansprüche

1. Motor (E), der Folgendes umfasst:
ein Kurbelwellengehäuse (9),
eine Entlüftungskammer (20), die von einem hinteren Ende des Kurbelgehäuses (9) nach oben vorspringt und dafür eingerichtet ist, eine Abscheidung von Schmieröl aus in dem Motor (E) erzeugtem Blow-by-Gas aufzunehmen, und
einen Fahrzeuggeschwindigkeitssensor (17), der vor der Entlüftungskammer (20) auf einer oberen Fläche des Kurbelwellengehäuses (9) an einer Position, die niedriger ist als ein Oberteil der Entlüftungskammer (20), bereitgestellt wird.

2. Motorrad, das einen Motor nach Anspruch 1 umfasst.

3. Motorrad nach Anspruch 2, das ferner einen Zylinder (1) umfasst, der im Allgemeinen vor dem Fahrzeuggeschwindigkeitssensor (17) von dem Kurbelwellengehäuse (9) nach oben vorspringt.

4. Motorrad nach Anspruch 2 oder 3, das ferner einen Starter (11) umfasst, der vor dem Fahrzeuggeschwindigkeitssensor (17) an der oberen Fläche des Kurbelwellengehäuses (9) befestigt ist.

5. Motorrad nach Anspruch 4, wobei der Fahrzeuggeschwindigkeitssensor (17), in Bezug auf den Starter (11), derart angeordnet ist, dass eine Höhenabmessung und eine Breitenabmessung des Fahrzeuggeschwindigkeitssensors (17) geringer sind als diejenigen des Starters (11).

6. Motorrad nach einem der Ansprüche 2 bis 5, wobei der Fahrzeuggeschwindigkeitssensor (17) derart an der oberen Fläche des Kurbelwellengehäuses (9) befestigt ist, dass eine Längsachse des Fahrzeuggeschwindigkeitssensors (17) in Bezug auf eine vertikale Achse geneigt ist.

7. Motorrad nach einem der Ansprüche 2 bis 6, wobei der Fahrzeuggeschwindigkeitssensor (17) ein Spitzenende (18) hat, das als eine Erfassungssektion dient, und die Erfassungssektion in das Kurbelwellengehäuse (9) eingesetzt ist.

8. Motorrad nach einem der Ansprüche 2 bis 7, das ferner eine Hauptwelle (12), die hinten an einer Kurbelwelle (8) angeordnet ist, und eine Antriebswelle (13), die hinten an der Hauptwelle (12) angeordnet ist, umfasst, wobei der Fahrzeuggeschwindigkeitssensor (17) oberhalb wenigstens einer von der Hauptwelle (12) und der Antriebswelle (13) angeordnet ist und dafür angeordnet ist, eine Drehgeschwindigkeit wenigstens einer von der Hauptwelle (12) und der Antriebswelle (13) als eine Fahrzeuggeschwindigkeit zu erfassen.

9. Motorrad nach einem der Ansprüche 2 bis 8, wobei der Fahrzeuggeschwindigkeitssensor (17) oberhalb eines Leerlaufschalters (27) angeordnet ist, der an einer Seitenfläche des Kurbelwellengehäuses (9) befestigt ist.

10. Motorrad nach einem der Ansprüche 2 bis 9, wobei der Fahrzeuggeschwindigkeitssensor (17) so angeordnet ist, dass er in einer Richtung von vorn nach hinten, gesehen von einer Seite des Motorrades, mit der Entlüftungskammer (20) überlappt.

11. Motorrad nach einem der Ansprüche 2 bis 10, wobei:
die Entlüftungskammer (20), auf der oberen Fläche des Kurbelwellengehäuses (9), eine Hauptkörpersektion (20A), die sich in einer Fahrzeugbreitenrichtung erstreckt, und eine Abgabesektion (20B), die von einem Ende der Hauptkörpersektion (20A) in der Fahrzeugbreitenrichtung nach vorn vorspringt und die abgeschiedenes Gas, das in der Entlüftungskammer (20) abgeschieden worden ist, an eine Ansauganlage des Motors (E) abgibt, und
der Fahrzeuggeschwindigkeitssensor (17) so angeordnet ist, dass er in der Richtung von vorn nach hinten, gesehen von der Seite des Motorrades, mit der Abgabesektion überlappt.

12. Motorrad nach einem der Ansprüche 2 bis 11, wobei der Fahrzeuggeschwindigkeitssensor (17) eine Verbinder (25) -Verbindungssektion an einem Ende in der Längsrichtung hat und derart befestigt ist, dass eine Achse in der Längsrichtung eine Achse, die sich in einer Fahrzeugbreitenrichtung erstreckt, schneidet.

## Revendications

1. Moteur (E), comprenant :
un carter de vilebrequin (9) ;
une chambre de reniflard (20), débordant vers le haut à partir d'une extrémité arrière du carter du moteur (9) et adaptée pour permettre la séparation de l'huile de lubrification du gaz de soufflage produit dans le moteur (E) ; et
un capteur de la vitesse du véhicule (17), agencé devant la chambre de reniflard (20) sur une surface supérieure du carter du moteur (9), au niveau d'une position plus basse qu'une partie supérieure de la chambre de reniflard (20).

2. Motocycle, comprenant un moteur selon la revendication 1.

3. Motocycle selon la revendication 2, comprenant en outre un cylindre (1) débordant en général vers le haut à partir du carter de vilebrequin (9), devant le capteur de la vitesse du véhicule (17).

4. Motocycle selon les revendications 2 ou 3, comprenant en outre un démarreur (11), fixé sur la surface supérieure du carter de vilebrequin (9), devant le capteur de la vitesse du véhicule (17).

5. Motocycle selon la revendication 4, dans lequel le capteur de la vitesse du véhicule (17) est agencé, par rapport au démarreur (11), de sorte qu'une dimension de la hauteur et une dimension de la largeur du capteur de la vitesse du véhicule (17) sont inférieures à celles du démarreur (11).

6. Motocycle selon l'une quelconque des revendications 2 à 5, dans lequel le capteur de la vitesse du véhicule (17) est fixé sur la surface supérieure du carter de vilebrequin (9), de sorte qu'un axe longitudinal du capteur de la vitesse du véhicule (17) est incliné par rapport à un axe vertical.

7. Motocycle selon l'une quelconque des revendications 2 à 6, dans lequel le capteur de la vitesse du véhicule (17) comprend une extrémité de pointe (18) servant de section de détection, la section de détection étant insérée dans le carter de vilebrequin (9).

8. Motocycle selon l'une quelconque des revendications 2 à 7, comprenant en outre un arbre principal (12), agencé sur l'arrière d'un arbre vilebrequin (8), et un arbre d'entraînement (13), agencé sur l'arrière de l'arbre principal (12), dans lequel le capteur de la vitesse du véhicule (17) est agencé au-dessus d'au moins un arbre, l'arbre principal (12) ou l'arbre d'entraînement (13), et est destiné à détecter une vitesse de rotation d'au moins un arbre, l'arbre principal (12) ou l'arbre d'entraînement (13), comme vitesse du véhicule.

9. Motocycle selon l'une quelconque des revendications 2 à 8, dans lequel le capteur de la vitesse du véhicule (17) est agencé au-dessus d'un interrupteur neutre (27) fixé sur une surface latérale du carter de vilebrequin (9).

10. Motocycle selon l'une quelconque des revendications 2 à 9, dans lequel le capteur de la vitesse du véhicule (17) est agencé de sorte à chevaucher la chambre du reniflard (20) dans une direction allant de l'avant vers l'arrière, vu à partir d'un côté du motocycle.

11. Motocycle selon l'une quelconque des revendications 2 à 10, dans lequel :
la chambre de reniflard (20) englobe, sur la surface supérieure du carter de vilebrequin (9), une section de corps principale (20A) s'étendant dans une direction de la largeur du véhicule, et une section de décharge (20B), débordant vers l'avant à partir d'une extrémité dans la direction de la largeur du véhicule, de la section de corps principale (20A), et déchargeant le gaz séparé ayant été séparé dans la chambre du reniflard (20) vers un système d'admission du moteur (E) ; et
le capteur de la vitesse du véhicule (17) est agencé de sorte à chevaucher la section de décharge dans la direction allant de l'avant vers l'arrière, vu à partir du côté du motocycle.

12. Motocycle selon l'une quelconque des revendications 2 à 11, dans lequel le capteur de la vitesse du véhicule (17) comporte une section de connexion de connecteur (25) au niveau d'une extrémité dans une direction longitudinale, et est fixé de sorte qu'un axe dans la direction longitudinale coupe un axe s'étendant dans une direction de la largeur du véhicule.
